# EUROPEAN PATENT APPLICATION

(11) **EP 1 845 511 A2**
(43) Date of publication of application: **17.10.2007**
(21) Application number: 07106090.9
(22) Date of filing: 12.04.2007
(51) Int. Cl.: G09G 3/28

(54) **Image signal processing device and television receiver using the same**

(30) Priority: 14.04.2006 JP 2006111561
(71) Applicant: Pioneer Corporation, Tokyo 1538654 (JP)
(72) Inventor: Santou, Osamu c/o Pioneer Corporation, Otha-ku, Tokyo (JP)
(74) Representative: Skuhra, Udo

(57) **Abstract**

There is provided an image signal processing device including: a compositing unit that masks a peripheral portion of an image by superimposing a mask signal on an image signal in under-scan where an entire image signal is set to and displayed on a matrix display.

## Description

### CROSS-REFERENCE TO RELATED APPLICATION

This application is based on and claims the benefit of priority from the prior Japanese Patent Application No.2006-111561, filed on April 14, 2006; the entire contents of which are incorporated herein by reference.

### Technical Field

The present invention relates to an image processing device of a matrix display such as a liquid crystal display, a plasma display, and an EL display and a television receiver having the same.

### BACKGROUND

### Description of Related Art

In the matrix display such as a liquid crystal display, a plasma display, and an EL display, a panel control unit generates a control signal from an image signal, and controls a light emitting unit having a plurality of pixels to emit light, thereby displaying images.

There are various kinds of configurations of pixels due to differences in size of panel or in control of emitting light. In addition, there are various kinds of television receivers using the matrix display or image signals inputted to a monitor of PC (personal computer). Accordingly, there are various kinds of the same configurations of image signals as configurations of pixels of the matrix display. Generally, in a scaler circuit unit, it is performed an enlargement/reduction process that matches the image signal with a configuration of pixels of a panel so as to display an optimized image in a television receiver or a PC monitor having the matrix display.

For example, in a matrix display, called as a full HD panel, which has a pixel configuration of 1920 x 1080, an input image signal is converted into an image signal of 1920 dots x 1080 line, and is inputted to a panel control unit.

Generally, an image display method called as an over-scan is used to an image display device called as a television receiver. A peripheral portion of an image signal inputted from an outside is out of the display of the television receiver, and is not displayed in practical. Accordingly, in the scaler circuit unit of the television receiver using the matrix display, the peripheral portion not displayed from the inputted image signal by the over-scan is removed, and the other image signal is converted so as to be suitable for the pixel configuration of the panel. In general, since a producer of an image signal has produced image contents for the over-scan display, problems due to not displaying the periphery of the image signal does not occur.

In case of a PC monitor used for displaying a PC signal, an image display method called as an under-scan is used against the over-scan. The under-scan is to display the entire inputted image signal onto a screen. In the PC monitor using the matrix display, the scaler circuit unit converts the entire inputted image signal into the pixel configuration of the panel. The screen is formed on the assumption that the image signal displayed by the PC monitor of the PC is displayed with the under-scan, differently from the assumed image signal displayed by the television receiver.

As described above, in the television receiver using the matrix display, the scaler circuit unit performs the enlargement/reduction process so as to match the image signal with the pixel configuration of the panel. Strictly speaking, the image signal displayed on the panel is processed unnecessarily for the original image signal.

In order to provide further high-quality image to users, it may be conceived a method of displaying images without the enlargement/reduction process of the scaler circuit by matching the pixel configuration of the panel with the image signal. For example, in the full HD panel, a further high-quality image may be provided when a HDTV signal with 1080i (1920 dots x 1080 lines) is displayed on the panel with 1920 x 1080 pixels as it is. This is the under-scan display which displays the entire image signal. Since the image is displayed on the matrix display with 1920 x 1080 pixels such as a liquid crystal display and a plasma display without resizing the HDTV signal, the deterioration of the image quality by resizing process can be avoided.

However, in the image signal (HDTV signals, etc.) for the television receiver manufactured for an over-scan, there are following problems in image quality in an under-scan display.

An image producer such as a broadcasting station may not sufficiently consider the image quality. In an image part not displayed at the time of an over-scan display, when all image signals for the television receiver is displayed, the image signal is left out or unnecessary noise is displayed, whereby the image quality may be deteriorated in watching. When all image signals for the television receiver is displayed, the positional configuration on the screen intended by the image producer in advance may be deformed. When the image signal is left out, the image signal may be not displayed on the entire screen.

For example, when the image position is moved and modified on the screen, the deteriorated part of the image signal is not displayed in the over-scan display as shown in Fig. 2. However, in the under-scan display, as shown in Fig. 3, the deteriorated part of the image signal may be displayed. In the plasma display, when this under-scan display is kept for a long time, image sticking of a fluorescent substance occurs in a part where the image signal is not displayed on the basis of pictures of the image signal as shown in Fig. 4, whereby the display may be damaged.

Meanwhile, it may be conceived that a display with a pixel configuration which can be displayed with the over-scan without the enlargement/reduction process by the scaler circuit is manufactured. However, in a point of view for a wide use in case of using the matrix display as the PC monitor, it is not preferable that the display panel is unified with resolution for an over-scan display.

To an image which is different in aspect ratio from the related-art display screen, it has been proposed a display which eases the deterioration of the image quality or the image sticking occurring in related area by masking a boundary between an image area and a non-image area (for example, refer to JP-A-2003-304410). However, it has not been disclosed an image signal processing device which eases the image quality or the image sticking in the boundary area generated in case of the under-scan display of the matrix display.

### SUMMARY

The present invention has been made in view of the above circumstances and provides an image processing device of a matrix display and a television receiver having the same. According to an aspect of the invention, an image signal processing device can hide low-quality image parts, and the image signal processing device can reduce an influence of the image sticking when an image signal for a television receiver is displayed with the under-scan without an enlargement/reduction process by a scaler circuit unit of a matrix display.

According to another aspect of the invention, there is provided an image signal processing device including a compositing unit that masks a peripheral portion of an image by superimposing a mask signal on an image signal in underscanning where an entire image signal is set to and displayed on a matrix display.

### BRIEF DESCRIPTION OF THE DRAWINGS

In the accompanying drawings:

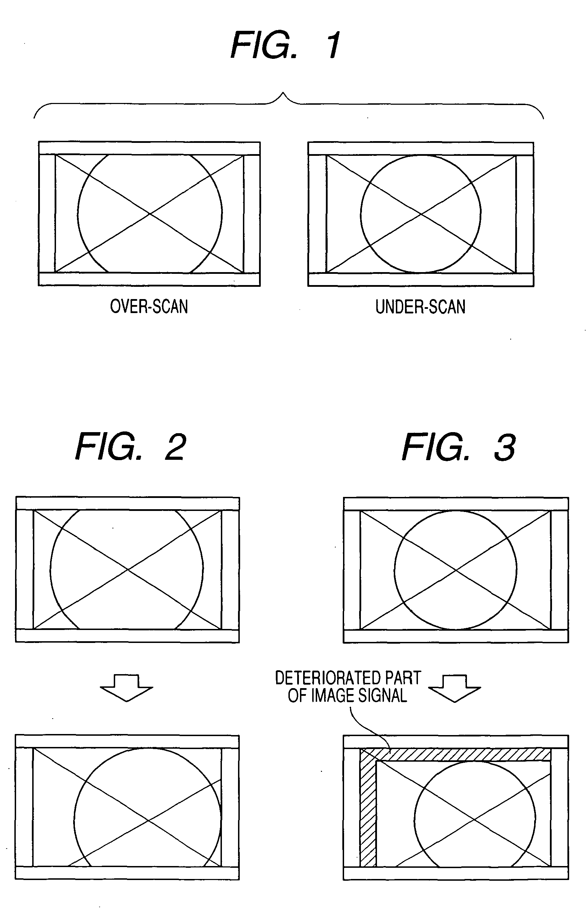

Fig. 1 is a schematic diagram illustrating an example displayed on a screen when the same image signals are displayed with an over-scan and an under-scan;
Fig. 2 is a schematic diagram illustrating an example displayed on a screen when the image position is modified on the screen (over-scan display);
Fig. 3 is a schematic diagram illustrating an example displayed on a screen when the image position is modified on the screen (under-scan display);

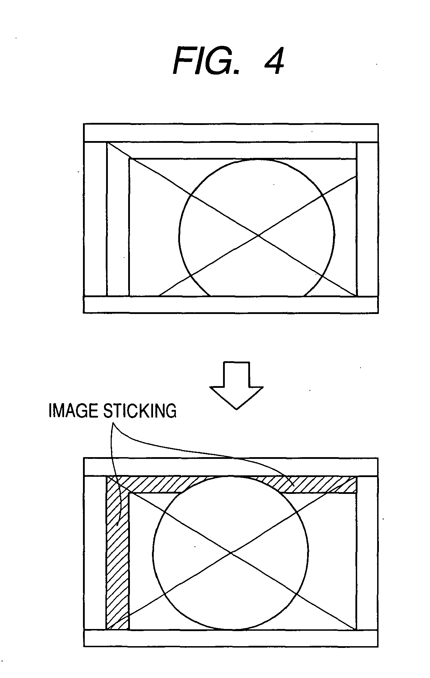

Fig. 4 is a diagram illustrating that a part which does not displaying an image signal causes image sticking of a fluorescent substance;

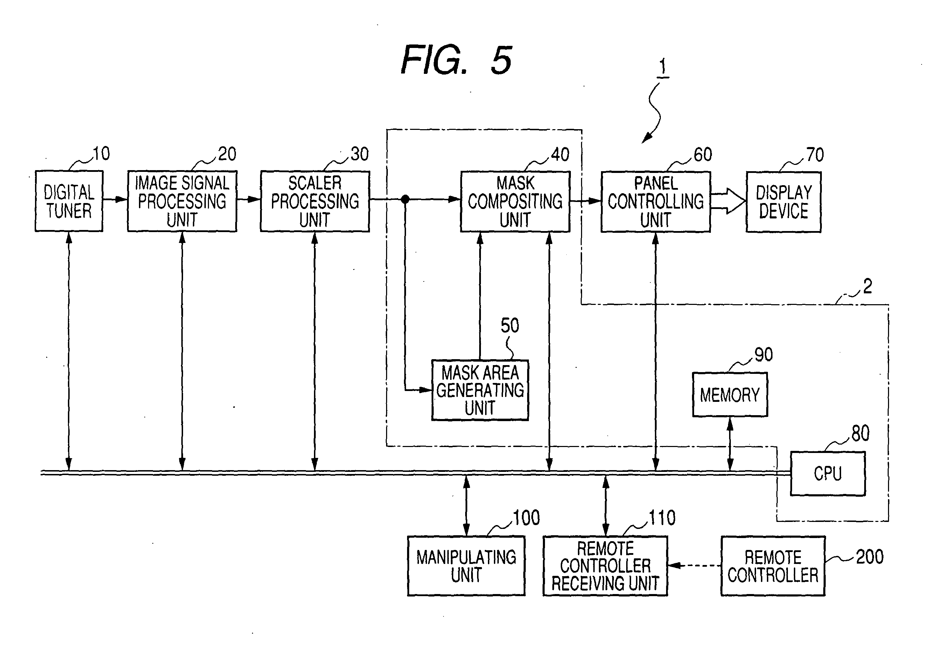

Fig. 5 is a diagram illustrating an inner configuration of the television receiver using the image signal processing device according to an embodiment of the invention;

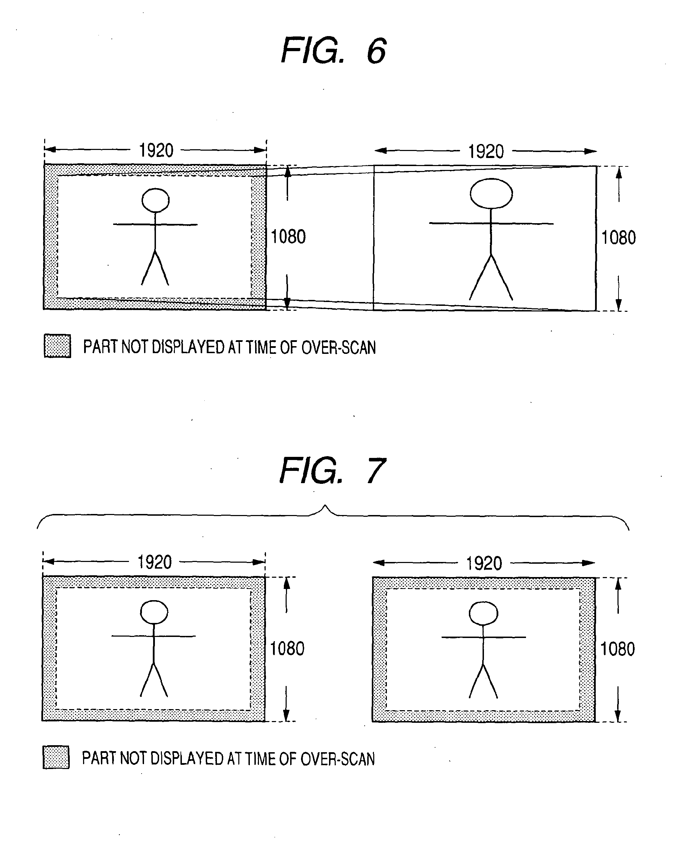

Fig. 6 is a diagram illustrating an outline of an over-scan display in a scaler processing unit of the television receiver in Fig. 5;
Fig. 7 is a diagram illustrating an outline of an under-scan display in a scaler processing unit of the television receiver in Fig. 5;

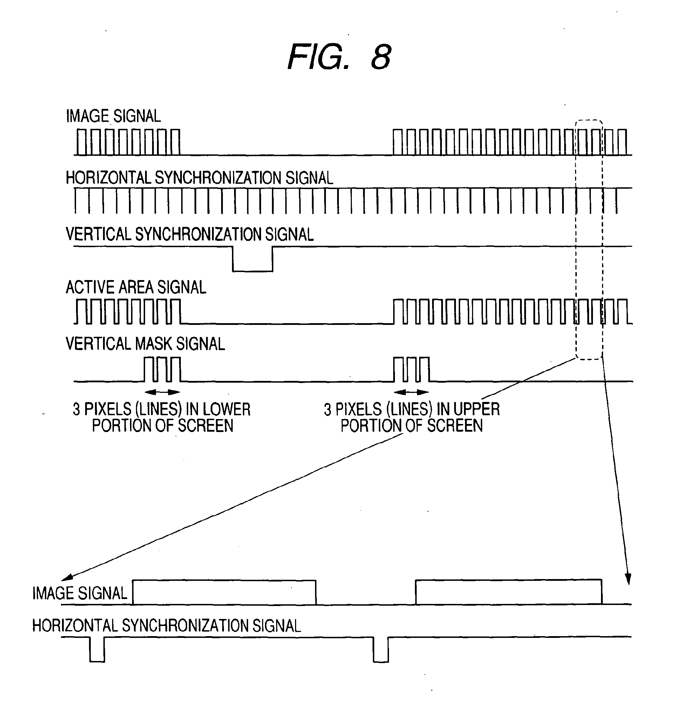

Fig. 8 is a schematic diagram illustrating a waveform example of a pulse for generating a mask of the television receiver in Fig. 5 (vertical direction);

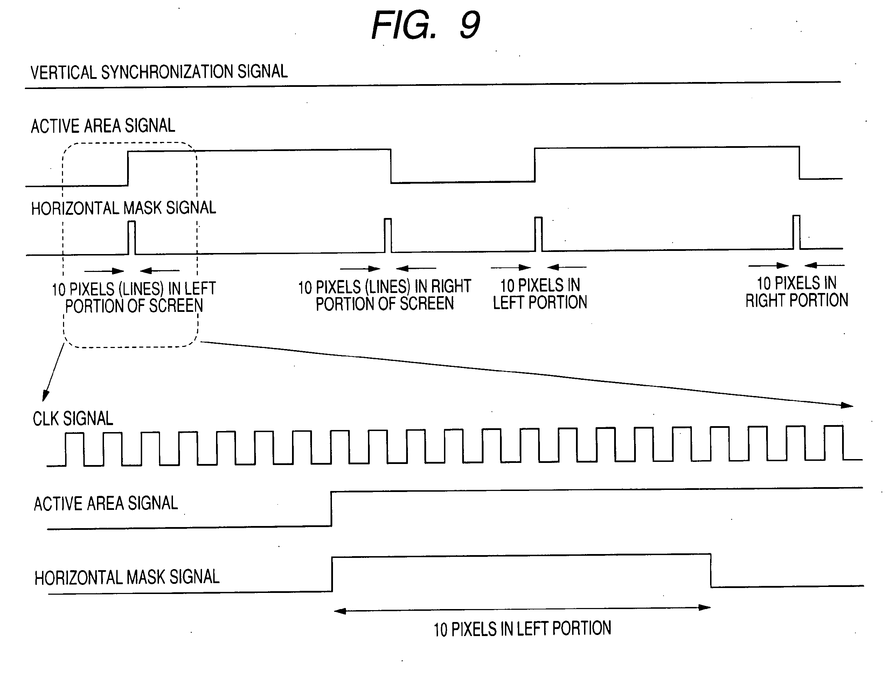

Fig. 9 is a schematic diagram illustrating a waveform example of a pulse for generating a mask of the television receiver in Fig. 5 (horizontal direction);

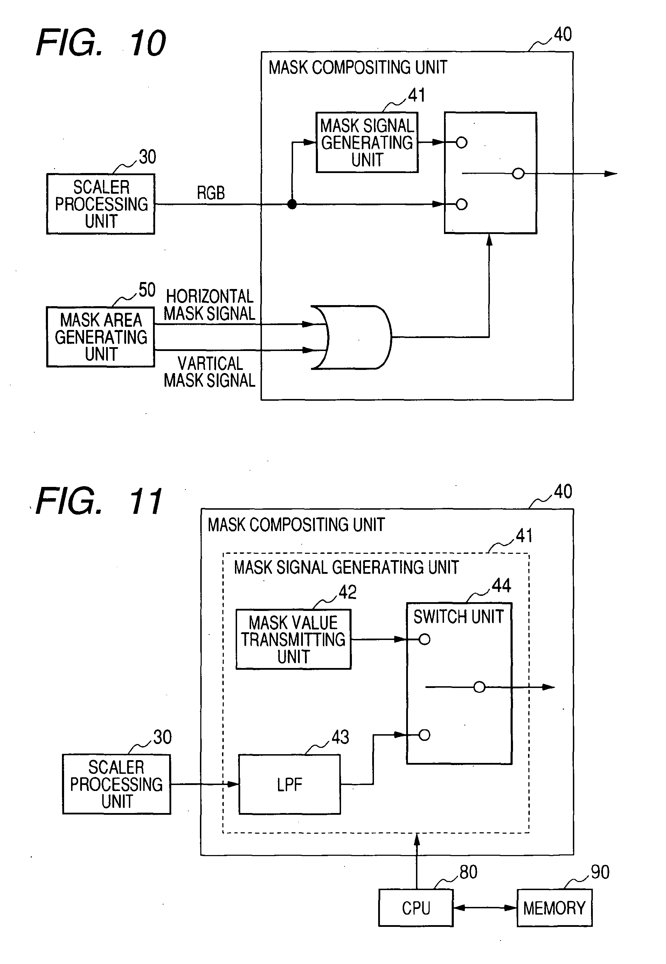

Fig. 10 is a diagram illustrating a detail configuration of a mask compositing unit of the television receiver in Fig. 5;
Fig. 11 is a diagram illustrating a detail configuration of a mask compositing unit of the television receiver in Fig. 5;

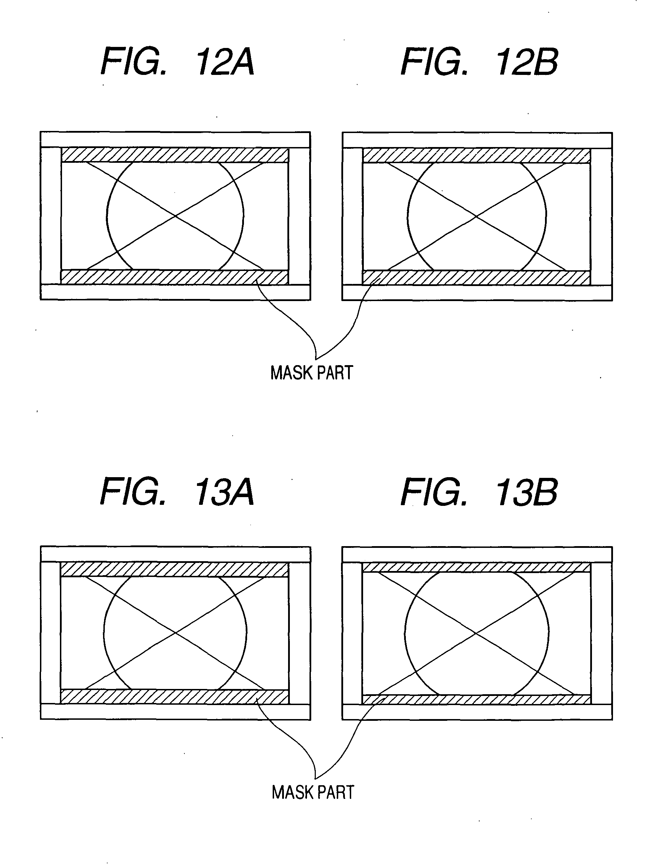

Figs. 12A and 12B are diagrams schematically illustrating an example displayed on a screen when a vertical mask signal at a predetermined level is superimposed on the upper and lower portions of the screen at the time of the under-scan display in the television receiver having the image signal processing device according to the embodiment;
Figs. 13A and 13B are diagrams schematically illustrating an example displayed on a screen when a vertical mask signal at a predetermined level is superimposed on the upper and lower portions of the screen at the time of the under-scan display in the television receiver having the image signal processing device according to the embodiment;

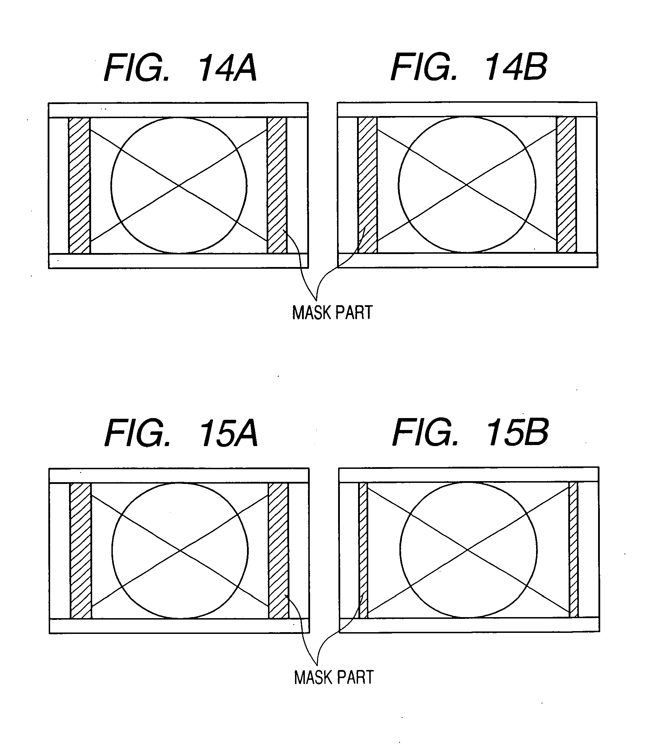

Figs. 14A and 14B are diagrams schematically illustrating an example displayed on a sere en when a horizontal mask signal at a predetermined level is superimposed on the left and right portions of the screen at the time of an under-scan display in the television receiver having the image s ignal processing device according to the embodiment;
Figs. 15A and 15B are diagrams schematically illustrating an example displayed on a screen when a horizontal mask signal at a predetermined level is superimposed on the left and right portions of the screen at the time of an under-scan display in the television receiver having the image signal processing device according to the embodiment;

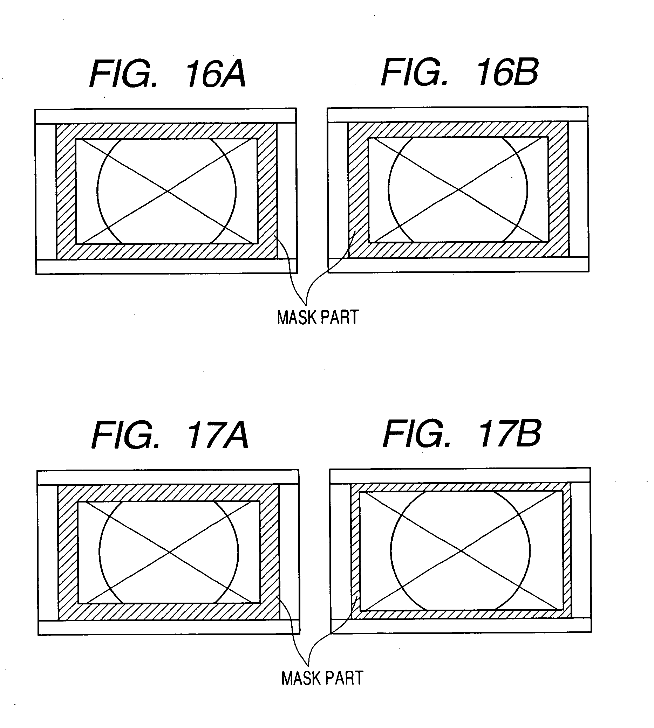

Figs. 16A and 16B are diagrams schematically illustrating an example displayed on a screen when a vertical mask signal at a predetermined level is superimposed on the upper and lower portions of the screen, and a horizontal mask signal at a predetermined level is superimposed on the left and right portions of the screen in the television receiver having the image signal processing device according to the embodiment;
Figs. 17A and 17B are diagrams schematically illustrating an example displayed on a screen when a vertical mask signal at a predetermined level is superimposed on the upper and lower portions of the screen, and a horizontal mask signal at a predetermined level is superimposed on the left and right portions of the screen in the television receiver having the image signal processing device according to the embodiment;

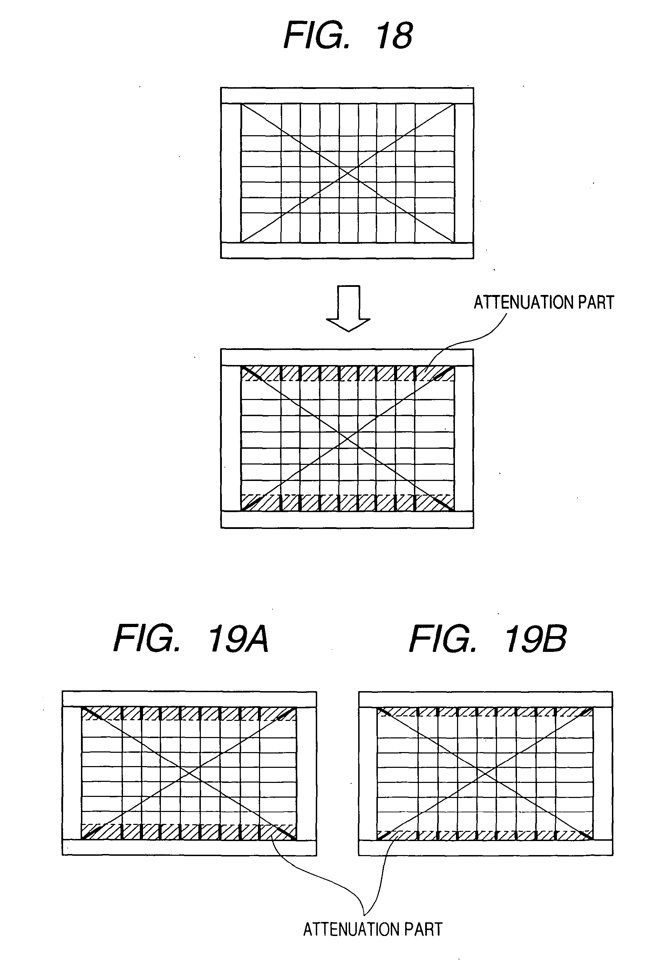

Fig. 18 is a diagram schematically illustrating an example displayed on a screen when a high frequency component of a signal in a predetermined range of the upper and lower portions of the screen is attenuated at the time of an under-scan display in the television receiver having the image signal processing device according to the embodiment;
Figs. 19A and 19B are diagrams schematically illustrating an example displayed on a screen when a high frequency component of a signal in a predetermined range of the upper and lower portions of the screen is attenuated at the time of an under-scan display in the television receiver having the image signal processing device according to the embodiment;

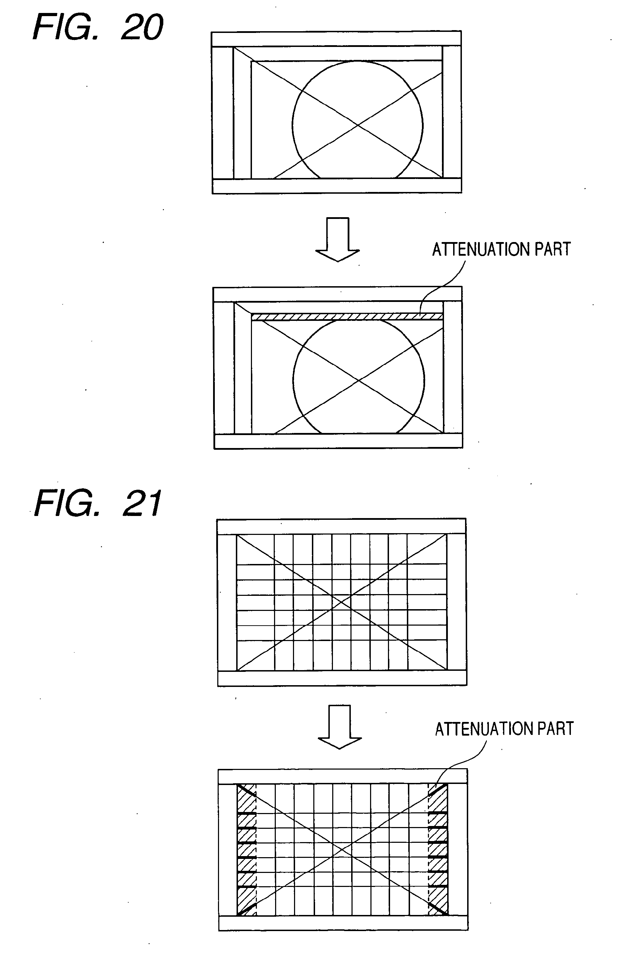

Fig. 20 is a diagram schematically illustrating an example displayed on a screen when a high frequency component of a signal in a predetermined range of the upper and lower portions of the screen is attenuated at the time of an under-scan display in the television receiver having the image signal processing device according to the embodiment;
Fig. 21 is a diagram schematically illustrating an example displayed on a screen when a high frequency component of a signal in a predetermined range of the left and right portions of the screen is attenuated at the time of an under-scan display in the television receiver having the image signal processing device according to the embodiment;

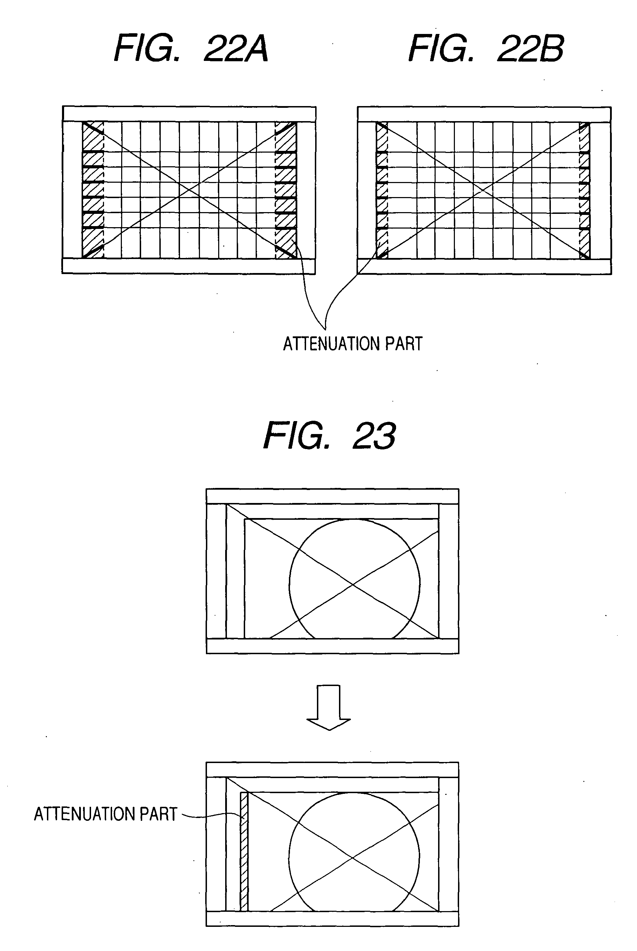

Fig. 22 is a diagram schematically illustrating an example displayed on a screen when a high frequency component of a signal in a predetermined range of the left and right portions of the screen is attenuated at the time of an under-scan display in the television receiver having the image signal processing device according to the embodiment;
Fig. 23 is a diagram schematically illustrating an example displayed on a screen when a high frequency component of a signal in a predetermined range of the left and right portions of the screen is attenuated at the time of an under-scan display in the television receiver having the image signal processing device according to the embodiment;

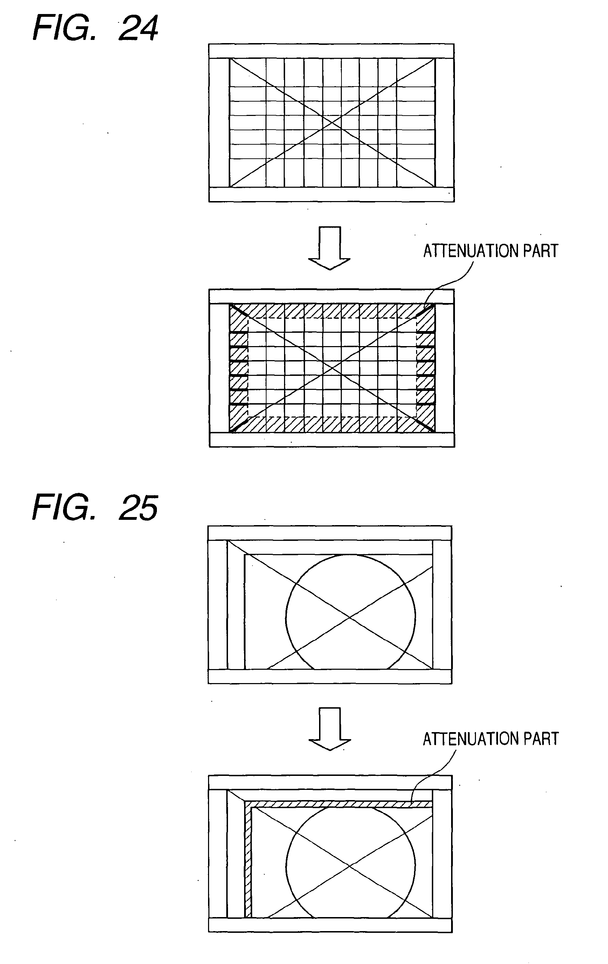

Fig. 24 is a diagram schematically illustrating an example displayed on a screen when a high frequency component of a signal in a predetermined range of the upper/lower and left/right portions of the screen is attenuated at the time of an under-scan display in the television receiver having the image signal processing device according to the embodiment; and
Fig. 25 is a diagram schematically illustrating an example displayed on a screen when a high frequency component of a signal in a predetermined range of the upper/lower and left/right portions of the screen is attenuated at the time of an under-scan display in the television receiver having the image signal processing device according to the embodiment.

### DESCRIPTION OF THE EMBODIMENTS

An embodiment according to the invention is described with reference to the drawings. An image signal processing device according to the embodiment includes a compositing unit which masks a peripheral portion of an image by superimposing a mask signal on an image signal in an under-scan display process of displaying the entire image signal inputted to a matrix display. Further, a television receiver has the image signal processing device. Accordingly, in case of an under-scan display process of displaying the entire image signal such as an HDTV signal on the television receiver, an image part (because the image quality of the peripheral portion which is cut at the time of an over-scan is not assured) is hidden in which quality in the peripheral portion is not assured, thereby improving the image quality. In addition, when the image signal in the peripheral portion is left out, the image sticking in the peripheral portion can be eased.

An embodiment of an image signal processing device and a television receiver having the image signal processing device are described in detail with reference to the drawings. In the embodiment, a television receiver including a matrix display having a pixel configuration of 1920 x 1080 is described as an example.

The television receiver having the image signal processing device in the embodiment has a function that a mask signal is superimposed on an image signal of a peripheral part, which is not displayed at the time of over-scan, at the time of under-scan and a function that the image signal at high frequency is attenuated with a predetermined gain.

As shown in Fig. 5, a television receiver 1 mainly includes a digital tuner 10, an image signal processing unit 20, a scaler processing unit 30, a mask compositing unit 40, a mask area generating unit 50, a panel controlling unit 60, a display device (matrix display with 1920 x 1080 pixels) 70, a CPU 80, a memory 90, a manipulating key 100, and a remote controller receiving unit 110.

The digital tuner 10 transmits a generated digital color-differential image signal to the image signal processing unit 20. The image signal processing unit 20 performs various signal processes (i.e. progressive conversion of an interlace signal, etc.) for high image quality of an image signal. The digital tuner 10 converts a color space of the image signal to RGB and transmits the converted signal to the scaler processing unit 30.

When display establishment for the device 70 recorded in the memory 90 is an over-scan display, the scaler processing unit 30 cut the over-scan display part from the image signal, and enlarges the image signal in the cut part to be suitable for 1920 x 1080 pixels of the display device 70, and transmits the enlarged signal to the mask compositing unit 40.

When display establishment for the device 70 recorded in the memory 90 is an under-scan display, the scaler processing unit 30 does not perform the enlargement/reduction process, transmits the image signal to the mask compositing unit 40

The scaler processing unit 30 transmits a horizontal synchronous signal, a vertical synchronous signal, an active area signal, and a clock signal of the image signal to the mask compositing unit 40 and the mask area generating unit 50.

The mask area generating unit 50 generates a mask signal indicating a range of a mask process for the image signal on the basis of the established value stored in the memory 90, and outputs the mask signal to the mask compositing unit 40. The mask signal is generated as a horizontal direction and a vertical direction. Fig. 8 illustrates a waveform of a pulse for generating a mask so as to perform masking with three upper and lower pixels (lines) in a vertical direction, and Fig. 9 illustrates a waveform of a pulse for generating a mask so as to perform masking with ten left and right pixels (lines) in a horizontal direction.

The mask compositing unit 40 converts the below-described mask signal and the signal inputted from the scaler processing unit 30 on the basis of the horizontal mask signal and the vertical mask signal transmitted from the mask area generating unit 50.

As described above, the mask compositing unit 40 generates the mask signal in the inner portion thereof. As shown in Fig. 11, the mask signal generating unit 41 includes a mask value transmitting unit 42 outputting a predetermined value, an LPF unit 43 cutting an image signal at high frequency inputted from the scaler processing unit 30, a switch unit 44 outputting any one signal of the mask value transmitting unit 42 or the LPF unit 43. A value transmitted from the mask value transmitting unit 42 is established by the CPU 80 on the basis of the value recorded in the memory 90. Similarly, a gain is established by the CPU 80 on the basis of the value recorded in the memory 90. Any one of two mask signals is used by the CPU 80 on the basis of the value recorded in the memory 90.

The image signal which the mask compositing unit 40 composites the mask signal is converted to a panel control signal by the panel control unit 60. The display device 70 displays the image on the basis of the panel control signal.

The memory 90 records parameter values needed for the mask display. A user inputs parameters through a user interface such as a manipulation key 100 and a remote controller 200, confirming the display image. Sequentially, the CPU 80 records the input value into the memory 90.

In the embodiment, in the above-described television receiver 1, the mask compositing unit 40, the mask area generating unit 30, the CPU 80 controlling the mask compositing unit 40 and the mask area generating unit 30, and the memory 90 recording various parameters such as a mask width serve as a compositing unit 2 (an image signal compositing unit 2).

Next, the under-scan display in the above-configured television receiver 1 is described.

The level of the superimposed signal can be optionally changed as shown as a difference between Figs. 12A and 12B. Further, the mask width can be also changed as shown as a difference between Figs. 13A and 13B.

The level of the superimposed signal can be optionally changed as shown as a difference between Figs. 14A and 14B. Further, the mask width can be also changed as shown as a difference between Figs. 15A and 15B.

The level of the superimposed signal can be optionally changed as shown as a difference between Figs. 16A and 16B. Further, the mask width can be also changed as shown as a difference between Figs. 17A and 17B.

The attenuation level of the signal can be optionally changed, and the attenuation width can be optionally changed as shown in Figs. 19A and 19B. By attenuating the high frequency component, as shown in Fig. 20, even when the image position is out of line, an influence of the image sticking can be reduced by making the boundary thereof obscure.

The attenuation level of the signal can be optionally changed, and the attenuation width can be optionally changed as shown in Figs. 22A and 22B. By attenuating the high frequency component, as shown in Fig. 23, even when the image position is out of line, an influence of the image sticking can be reduced by making the boundary thereof obscure.

The attenuation level of the signal can be optionally changed, and the attenuation width can be optionally changed. By attenuating the high frequency component, as shown in Fig. 25, even when the image position is out of line, an influence of the image sticking can be reduced by making the boundary thereof obscure.

In the television receiver according to the embodiment, there is no deterioration due to resizing, and the high quality image can be provided, which a noise and the like is properly masked in. Further, an influence of image sticking of a peripheral screen can be reduced.

As described above in detail, the image signal processing device according to the embodiment, in the under-scan display process of displaying the entire image signal, includes the compositing unit which superimposes a mask signal on the image signal and which masks an image of the peripheral portion thereof. Accordingly, in case of an under-scan display process of displaying the entire image signal such as an HDTV signal on the television receiver, an image part (because a producer such as a broadcasting station has not assured the image quality of the peripheral portion which is cut at the time of an over-scan) is hidden in which quality in the peripheral portion is not assured, thereby improving the image quality. In addition, when the image signal in the peripheral portion is left out, the image sticking in the peripheral portion can be eased.

## Claims

1. An image signal processing device comprising:
a compositing unit that masks a peripheral portion of an image by superimposing a mask signal on an image signal in under-scan where an entire image signal is set to and displayed on a matrix display.

2. The image signal processing device according to claim 1, wherein the mask signal is a vertical mask signal, which masks upper and lower peripheral portions of the image.

3. The image signal processing device according to claim 1, wherein the mask signal is a horizontal mask signal, which masks left and right peripheral portions of the image.

4. The image signal processing device according to claim 1, wherein the mask signal is a vertical mask signal and a horizontal mask signal, which mask upper and lower peripheral portions and left and right peripheral portions of the image.

5. The image signal processing device according to claim 1, wherein the compositing unit can optionally change a signal level of the mask signal.

6. The image signal processing device according to claim 1, wherein the compositing unit can optionally change a mask width of the mask signal.

7. The image signal processing device according to claim 1, wherein the compositing unit attenuates a high-frequency component of the image signal by the mask signal.

8. The image signal processing device according to claim 1, wherein the matrix display has 1920 x 1080 pixels, and the image signal has 1920 dots x 1080 lines.

9. A television receiver comprising:
an image signal processing device including a compositing unit that masks a peripheral portion of an image by superimposing a mask signal on an image signal in underscanning where an entire image signal is inputted to and displayed on a matrix display.
